# EUROPÄISCHE PATENTANMELDUNG

(11) **EP 4 108 843 A1**
(43) Veröffentlichungstag der Anmeldung: **28.12.2022**
(21) Anmeldenummer: 21181570.9
(22) Anmeldetag: 24.06.2021
(51) Int. Cl.: E04B 1/19, F16B 7/22, E04B 1/24

(54) **VERBINDUNGSKNOTEN FÜR EIN TRAGWERK**

(71) Anmelder: Hermann Blassnig Engineering ag, 9488 Schellenberg (LI)
(72) Erfinder: Blassnig, Hermann, 9488 Schellenberg (LI)
(74) Vertreter: Patentbüro Paul Rosenich AG

(57) **Zusammenfassung**

Die Erfindung betrifft einen Verbindungsknoten (10) für ein Tragwerk umfassend einen zentralen Montagekörper (1) zum Verbinden von Stäben (7) des Tragwerkes, wobei an dem Montagekörper (1) zumindest zwei, vorzugsweise zumindest sechs, in unterschiedliche Richtungen orientierte Befestigungsstellen (11) ausgebildet sind,
dadurch gekennzeichnet, dass der Verbindungsknoten (10) montagekörperseitige Adapterelemente (3), die mittels - vorzugsweise bolzenförmiger und/oder zumindest ein Gewinde aufweisender - erster Verbindungselemente (2) an Befestigungsstellen (11) des zentralen Montagekörpers (1) - vorzugsweise lösbar - befestigt sind, umfasst, wobei die montagekörperseitigen Adapterelemente (3) jeweils eine formschlüssige Aufnahme (13) für ein stabseitiges Adapterelement (4) mit einem zur formschlüssigen Aufnahme gegengleichen Abschnitt (14) aufweisen.

## Beschreibung

Die Erfindung betrifft einen Verbindungsknoten für ein Tragwerk nach dem Oberbegriff des Anspruchs 1, umfassend einen zentralen Montagekörper zum Verbinden von Stäben des Tragwerkes, wobei an dem Montagekörper zumindest zwei, vorzugsweise zumindest sechs, in unterschiedliche Richtungen orientierte Befestigungsstellen ausgebildet sind. Die Erfindung betrifft auch ein Tragwerk nach Anspruch 13, ein Montageset zur Herstellung eines Verbindungsknotens für ein Tragwerk nach Anspruch 14 und dessen Verwendung nach Anspruch 15.

Die WO13055292A1 offenbart ein Verbindungssystem eines Rahmenwerkes mit einem würfelförmigen Element, welches an jeder seiner Seiten eine buchsenartige Aufnahme für ein Einsteckteil eines Stabelementes aufweist.

Ein würfelförmiger Knotenpunktteil zum Verbinden von Elementen eines Bauwerks ist beispielsweise auch in der EP1253255A1 offenbart.

Weiters sind solche Knoten auch in der US2015377414A, in der WO12078107A1 und in der DE202015001209U1 offenbart.

Nachteilig an diesen bekannten Lösungen ist, dass das Zusammenbauen eines durch solche Verbindungsknoten zusammengehaltenen Tragwerkes oftmals sehr umständlich ist, viel Zeit und auch Raum in Anspruch nimmt und Fehlkonstruktionen durch falsches Zusammenfügen nicht ausschließt. Zudem sind solche Lösungen unflexibel und nur für beschränkte Anwendungsmöglichkeiten konzipiert. Ein weiterer wesentlicher Nachteil besteht darin, dass teilweise Elemente bekannter Verbindungsknoten, insbesondere Verbindungselemente, im Tragwerk z.T. hohen mechanischen Belastungen ausgesetzt sind. Solche Verbindungsknoten stellen meist vorprogrammierte Schwachstellen im Tragwerk dar, sodass sowohl Belastbarkeit als auch Lebensdauer gering sind.

Aufgabe der vorliegenden Erfindung ist es somit, einen Verbindungsknoten zu schaffen, welcher die vorgenannten Nachteile nicht aufweist und sich insbesondere durch leichte und zeitsparende Assemblierung und gleichzeitig hohe Stabilität auszeichnet. Die Konstruktion sowie die einzelnen Bauteile sollen einen fehlerhaften Zusammenbau weitgehend ausschliessen. Ausserdem sollen die Belastungen durch die Art der Verbindungen zwischen den einzelnen Bauteilen optimal verteilt werden. Schliesslich soll in bevorzugten Ausführungsformen die Funktionalität und Flexibilität eines Verbindungsknotens erweitert werden.

Die Aufgabe wird durch die Merkmale des unabhängigen Anspruchs gelöst. Vorteilhafte Weiterbildungen sind in den Figuren und in den abhängigen Patentansprüchen dargelegt.

Gemäss der Erfindung umfasst der Verbindungsknoten für ein Tragwerk einen zentralen Montagekörper zum Verbinden von Stäben des Tragwerkes, wobei an dem Montagekörper zumindest zwei, vorzugsweise zumindest sechs, in unterschiedliche Richtungen orientierte Befestigungsstellen ausgebildet sind. Dabei umfasst der Verbindungsknoten montagekörperseitige Adapterelemente, die mittels - vorzugsweise bolzenförmiger und/oder zumindest ein Gewinde aufweisender - erster Verbindungselemente an Befestigungsstellen des zentralen Montagekörpers - vorzugsweise lösbar - befestigt sind. Die montagekörperseitigen Adapterelemente weisen jeweils eine formschlüssige Aufnahme für ein stabseitiges Adapterelement mit einem zur formschlüssigen Aufnahme gegengleichen Abschnitt auf.

Durch die erfindungsgemässen Massnahmen wird eine hohe Belastbarkeit insbesondere aufgrund der formschlüssigen Verbindungen erreicht. Durch die formschlüssige Aufnahme des montagekörperseitigen Adapterelementes, in welchen der gegengleiche Abschnitt des stabseitigen Adapterelementes eingebracht wird, wird eine stabile formschlüssige Verbindung geschaffen. Die formschlüssige Aufnahme des montagekörperseitigen Adapterelementes kann sowohl weiblicher Art (z.B. Ausnehmung, Vertiefung, Einbuchtung, etc.) als auch männlicher Art (z.B. Vorsprung, vorragender oder vorstehender Abschnitt, etc.) sein. Entsprechend gegengleich ist dann der Abschnitt des stabseitigen Adapterelementes ausgebildet.

Darüber hinaus bietet das System eine einfache Montage und Demontage, wodurch nicht nur der Zeitaufwand, sondern auch die Anfälligkeit für fehlerhaftes Zusammensetzen des Tragwerkes deutlich reduziert wird. Der Verbindungsknoten und seine Bestandteile können derart konzipiert werden, dass alle Verbindungen und Bauelemente lösbar und wieder verwendbar sind.

Ein weiterer Vorteil ist, dass das Tragwerk nachträglich in alle Richtungen erweitert werden kann, indem weitere Adapterelemente am Montagkörper angebracht und die daran anschliessenden Baugruppen angefügt, insbesondere einsetzt und verschraubt, werden können.

Aufgrund der Adapterelemente kann ein schlankes Design gewählt werden, sodass die durch die Verbindungsknoten miteinander verbundenen Stäbe auch als optische bzw. Design-Elemente genutzt werden können.

Erfindungsgemässe Verbindungsknoten bzw. ein erfindungsgemässes Tragwerk kann sowohl für Bauwerke bzw. in der Architektur, z.B. für den Hausbau oder gewerbliche Gebäude, verwendet werden, als auch für Gestelle, Gerüste bzw. Tragwerke aller Art eingesetzt werden. Dazu zählen auch Regale, Messestände, Maschinengestelle, und dgl. entsprechend der zu tragenden Last sind Material, Materialstärke und Dimensionierung der einzelnen Bauelemente des Tragwerkes zu wählen.

Der Begriff "Stab" ist in vorliegender Anmeldung breit zu verstehen und bedeutet insbesondere ein längliches Element, welches sich zwischen den Verbindungsknoten eines Tragwerkes erstrecken kann. Darunter fallen jedenfalls Balken, Träger, Stangen, Rohre, Profile jeglichen Querschnitts, einschliesslich Hohlprofile, Profilrohre, etc. Auch können die verwendeten Stäbe sowohl einen geradlinigen Verlauf, als auch einen gebogenen (Kuppelform) bzw. geknickten Verlauf haben.

In bevorzugter Ausführung sind die Stäbe als Profile, insbesondere Strangpressprofile, vorzugsweise aus Aluminium, ausgebildet. Der Querschnitt des Profils kann jede beliebige Form aufweisen, und insbesondere quadratisch oder rechteckig wie auch rund oder oval sein. In besonderen Anwendungsfällen könnte das Profil auch ein modifiziertes (Aluminium)Standardprofil oder Edelstahlprofil sein. Dies in jenen Fällen, in denen man eine besonders leichte Ausführung haben möchte oder wenn das Design im Vordergrund steht.

Der Montagekörper kann jede beliebige Form aufweisen, z.B. würfel- oder quaderförmig oder z.B. eine Hexaeder-Form. Neben Formen, bei denen die Flächen rechtwinklig zueinander stehen können aber auch unrechtwinklige Formen zu Anwendung gelangen. Z.B. könnte mit solchen Systemen das Tragwerk für eine Kuppelform gebaut werden. Alternativ könnte die Form des Montagekörpers auch kugelig sein.

Das montagekörperseitige und/oder das stabseitige Adapterelement können ebenfalls eine Öffnung, bevorzugt in Form einer Passbohrung (bzw. Aufnahmebohrung) aufweisen, damit eine formschlüssige Kräfteübertragung zwischen dem ersten, zweiten oder dritten Verbindungselement und dem jeweiligen Adapterelement möglich ist.

Das montagekörperseitige Adapterelement und das stabseitige Adapterelement können von der Form her einander gleichen. Die Adapterelemente können zudem auch so ausgeführt werden, dass sie nicht nur eine formschlüssige Verbindung herstellen, sondern auch als Toleranz- oder Schwingungsausgleichselement dienen.

Eine bevorzugte Ausführungsform zeichnet sich dadurch aus, dass der Montagekörper in Form eines Polyeders, insbesondere in Form eines Würfels, oder in Form einer Kugel ausgebildet ist und/oder dass der Montagekörper in seinem Inneren einen Hohlraum ausbildet. Die Flächen des Montagekörpers bilden in verschiedene Richtungen orientierte Montageflächen mit Befestigungsstelle.

Eine bevorzugte Ausführungsform zeichnet sich dadurch aus, dass die ersten Verbindungselemente von dem Montagekörper (vorzugsweise rechtwinkelig zur jeweiligen Montagefläche) abragen, wobei vorzugsweise die Achse eines ersten Verbindungselementes in einer Symmetrieachse des Montagekörpers liegt und/oder durch den Mittelpunkt des Montagekörpers geht. Die ersten Verbindungselemente sind vorzugsweise Gewindebolzen, die in den Montagekörper einschraubbar sind.

Eine bevorzugte Ausführungsform zeichnet sich dadurch aus, dass die Befestigungsstellen an dem Montagekörper jeweils durch eine Öffnung, vorzugsweise in Form eines Gewindelochs, insbesondere Gewindepassbohrung, zum Aufnehmen, insbesondere Einschrauben, eines ersten Verbindungselementes gebildet sind. Bevorzugt wird der Montagekörper so ausgeführt, dass an jeder (Montage-)Fläche des Montagekörpers eine Öffnung (insbesondere Gewindepassbohrung) rechtwinklig eingearbeitet wird. Die Öffnung (bzw. Gewindepassbohrung) zentriert bzw. positioniert einerseits das erste Verbindungselement (z.B. in Form eines Passbolzens) und sorgt andererseits für die formschlüssige Übertragung der Lasten.

Die ersten Verbindungselemente sind bevorzugt als Gewindepassbolzen ausgeführt. Die Gewindepassbolzen werden nach Bedarf in den Montagekörper eingeschraubt, d.h. in die als Gewindepassbohrungen ausgebildeten Öffnungen im Montagekörper (also an jenen Stellen, an welchen Stäbe angebracht werden sollen). Es ist aber möglich, bei einem schon bestehenden Tragwerk Gewindepassbolzen nachträglich in einen Montagekörper einzuschrauben, um bspw. das Tragwerk in einer oder mehreren Richtungen zu erweitern. Der Gewindepassbolzen zentriert sich in der Gewindepassbohrung des Montagekörpers. Die Gewindepassbolzen können montagekörperseitig (also zur Verbindung des montagekörperseitigen Adapterelementes an dem Montagekörper) und stabseitig (also zur Verbindung des stabseitigen Adapterelementes an dem Stab) gleich ausgebildet sein (können aber selbstverständlich auch verschieden sein).

Eine bevorzugte Ausführungsform zeichnet sich dadurch aus, dass montagekörperseitige Adapterelemente jeweils ein dem Montagekörper zugewandtes Befestigungsloch für ein erstes Verbindungselement aufweisen, wobei vorzugsweise das Befestigungsloch in Form einer Passbohrung zur formschlüssigen Aufnahme des ersten Verbindungselements ausgebildet ist und/oder wobei vorzugsweise das Befestigungsloch mit seinem dem Montagekörper abgewandten Ende in die formschlüssige Aufnahme des montagekörperseitigen Adapterelementes mündet. Das erste Verbindungselement erstreckt sich somit sowohl in der Öffnung des Montagekörpers als auch in dem Befestigungsloch des Adapterelementes. Es sorgt für eine formschlüssige und bei Verwendung einer dazugehörigen Mutter auch für kraftschlüssige Verbindung.

Eine bevorzugte Ausführungsform zeichnet sich dadurch aus, dass im zusammengefügten Zustand eines montagekörperseitigen Adapterelementes und eines stabseitigen Adapterelementes das dem Montagekörper abgewandte Ende des Befestigungslochs durch das stabseitige Adapterelement - vorzugsweise vollständig - verdeckt ist. Dadurch ist das erste Verbindungselement vollständig vor Schmutz und äusseren mechanischen Einwirkungen geschützt, wodurch eine allfällige spätere Demontage erleichtert wird.

Eine bevorzugte Ausführungsform zeichnet sich dadurch aus, dass die Aufnahme zwischen einer - vorzugsweise eine ebene Fläche ausbildenden - ersten Wand und einer - der ersten Wand gegenüberliegenden und vorzugsweise zur ersten Wand geneigten - zweiten Wand des montagekörperseitigen Adapterelementes ausgebildet ist, wobei die erste Wand und die zweite Wand quer zur Längsachse des von dem montagekörperseitigen Adapterelement getragenen Stabes und/oder zur Längsachse jenes ersten Verbindungselementes, mit dem das montagekörperseitige Adapterelement an dem Montagekörper befestigt ist, stehen. Dies ermöglich ein Einsetzen des Stabes senkrecht zu seiner Längserstreckung.

Eine bevorzugte Ausführungsform zeichnet sich dadurch aus, dass in der ersten Wand das dem Montagekörper abgewandte Ende des Befestigungsloches ausgebildet ist und/oder dass in der zweiten Wand eine mit dem Befestigungsloch fluchtende Ausnehmung, insbesondere zum Einbringen eines ersten Verbindungselementes in das Befestigungsloch und/oder zum Verschrauben einer Mutter auf dem ersten Verbindungselement, ausgebildet ist. Dadurch wird Zusammenbau und Demontage erheblich erleichtert.

Eine bevorzugte Ausführungsform zeichnet sich dadurch aus, dass die formschlüssige Aufnahme eines montagekörperseitigen Adapterelementes asymmetrisch zur Längsachse des von dem montagekörperseitigen Adapterelement getragenen Stabes und/oder asymmetrisch zur Längsachse jenes ersten Verbindungselementes, mit dem das montagekörperseitige Adapterelement an dem Montagekörper befestigt ist, ist. Dies ermöglicht das Einsetzen des Stabes in einer anderen Richtung als entlang seiner Längserstreckung.

Eine bevorzugte Ausführungsform zeichnet sich dadurch aus, dass sich die formschlüssige Aufnahme eines montagekörperseitigen Adapterelementes in einer Richtung quer, vorzugsweise senkrecht, zur Längsachse des von dem montagekörperseitigen Adapterelement getragenen Stabes und/oder zur Längsachse jenes ersten Verbindungselementes, mit dem das montagekörperseitige Adapterelement an dem Montagekörper befestigt ist, öffnet und/oder dass die formschlüssige Aufnahme einen in einer Richtung quer, vorzugsweise senkrecht, zur Längsachse des von dem montagekörperseitigen Adapterelement getragenen Stabes und/oder zur Längsachse jenes ersten Verbindungselementes, mit dem das montagekörperseitige Adapterelement an dem Montagekörper befestigt ist, zulaufenden - vorzugsweise konusförmig und/oder wannenförmig und/oder V-förmig zulaufenden - Abschnitt aufweist. Durch diese Massnahmen kann ein Stab (auch nachträglich) eingefügt oder entnommen werden, ohne dass die Distanz zwischen zwei Montagekörpern für diesen Vorgang verändert oder ein Teil des Tragwerkes (vorübergehend) abgebaut werden muss. Die zulaufende Formgebung der formschlüssigen Aufnahme sorgt für ein Verkeilen der Adapterelemente und dadurch für mehr Stabilität und höhere Belastbarkeit.

Eine bevorzugte Ausführungsform zeichnet sich dadurch aus, dass die formschlüssige Aufnahme durch eine hakenförmige Struktur gebildet ist. Die Möglichkeit des Einhakens führt zu besonders hoher Stabilität sowie zur einfachen Montage und Demontage.

Eine bevorzugte Ausführungsform zeichnet sich dadurch aus, dass der zur formschlüssigen Aufnahme gegengleiche Abschnitt eines stabseitigen Adapterelements - vorzugsweise ausschliesslich - in einer Richtung quer, vorzugsweise senkrecht, zur Längsachse des das stabseitige Adapterelement tragenden Stabes und/oder zur Längsachse jenes ersten Verbindungselementes, mit dem das montagekörperseitige Adapterelement an dem Montagekörper befestigt ist, in die formschlüssige Aufnahme des montagekörperseitigen Adapterelements einfügbar ist. Ein Hauptvorzug dieses Systems ist, dass die Stäbe von oben oder von der Seite eingesetzt und auch wieder entnommen werden können, ohne, dass eine Demontage anderer Elemente notwendig wäre.

Eine bevorzugte Ausführungsform zeichnet sich dadurch aus, dass ein montagekörperseitiges Adapterelement und ein stabseitiges Adapterelement im zusammengefügten Zustand durch ein - vorzugsweise bolzenförmiges - zweites Verbindungselement miteinander verbunden sind, wobei vorzugsweise das zweite Verbindungselement durch den Bereich der formschlüssigen Aufnahme hindurchtritt und/oder wobei vorzugsweise die Achse des bolzenförmigen zweiten Verbindungselementes quer, vorzugsweise senkrecht, zur Längsachse des das stabseitige Adapterelement tragenden Stabes und/oder zur Längsachse jenes ersten Verbindungselementes, mit dem das montagekörperseitige Adapterelement an dem Montagekörper befestigt ist, verläuft. Hier wird der Formschluss durch einen zusätzlichen Kraftschluss verstärkt. Bevorzugt sind diese zweiten Verbindungselemente gleich ausgebildet, wie die ersten Verbindungselemente.

Eine bevorzugte Ausführungsform zeichnet sich dadurch aus, dass die stabseitigen Adapterelemente im Wesentlichen dieselbe, vorzugsweise eine identische, Geometrie aufweisen, wie die montagekörperseitigen Adapterelemente. Dadurch werden die Herstellung und der Zusammenbau weiter erleichtert.

Eine bevorzugte Ausführungsform zeichnet sich dadurch aus, dass ein montagekörperseitiges Adapterelement und ein stabseitiges Adapterelement im zusammengefügten Zustand zusammen eine Quaderform, vorzugsweise Würfelform, bilden. Bevorzugt geht die Aussenkontur der zusammengefügten Adapterelemente nicht über den Querschnitt des Stabes hinaus und/oder entspricht die Aussenkontur der zusammengefügten Adapterelemente im Wesentlichen dem Querschnitt des Stabes.

Eine bevorzugte Ausführungsform zeichnet sich dadurch aus, dass die montagekörperseitigen Adapterelemente und/oder die stabseitigen Adapterelemente zumindest teilweise - vorzugsweise vollständig - aus einem verformbaren, insbesondere elastisch verformbaren, und/oder schwingungsdämpfenden Material, vorzugsweise einem Gummi, einem Elastomer, einem Schaumstoff und/oder einem Kautschuk, gebildet sind. Dadurch kann dem Verbindungsknoten eine weitere Funktion verliehen werden, nämlich einerseits eine Anpassungsfähigkeit im Zusammenhang mit dem Ausgleich von Toleranzen und andererseits eine schwingungs- oder stossdämpfende Eigenschaft.

Eine bevorzugte Ausführungsform zeichnet sich dadurch aus, dass die stabseitigen Adapterelemente mittels - vorzugsweise bolzenförmiger und/oder zumindest ein Gewinde aufweisender - dritter Verbindungselemente mit den Stäben verbunden sind, wobei vorzugsweise die Längsachse eines dritten Verbindungselementes im Wesentlichen parallel zur Längsachse des jeweiligen Stabes ist. Bevorzugt sind diese dritten Verbindungselemente gleich ausgebildet wie die ersten Verbindungselemente.

Das Ziel wird auch erreicht mit einem Tragwerk, insbesondere einem Gerüst, einem Gestell oder Bauwerk, mit einer Vielzahl von Stäben, vorzugsweise in Form von Profilen, insbesondere Hohlprofilen, die durch mehrere erfindungsgemäße Verbindungsknoten miteinander verbunden sind. Im Falle der Verwendung von Profilen für die Stäbe, kann ein solches Tragwerk auch als Profil-Verbundsystem bezeichnet werden.

Das Ziel wird auch erreicht mit einem Montageset zur Herstellung eines Verbindungsknotens für ein Tragwerk, umfassend:
- einen zentralen Montagekörper zum Verbinden von Stäben des Tragwerkes, wobei an dem Montagekörper zumindest zwei, vorzugsweise zumindest sechs, in unterschiedliche Richtungen orientierte Befestigungsstellen ausgebildet sind,
- montagekörperseitige Adapterelemente mit jeweils einer formschlüssigen Aufnahme für ein stabseitiges Adapterelement,
- erste Verbindungselemente zum Befestigen der montagekörperseitigen Adapterelemente an einer Befestigungsstelle des zentralen Montagekörpers, wobei vorzugsweise die ersten Verbindungselemente bolzenförmig sind und/oder zumindest ein Gewinde aufweisen,
- stabseitige Adapterelemente mit jeweils einem zur formschlüssigen Aufnahme eines montagekörperseitigen Adapterelementes gegengleichen Abschnitt,
- und gegebenenfalls Stäben, vorzugsweise in Form von Profilen, insbesondere Hohlprofilen, mit denen die stabseitigen Adapterelemente verbindbar sind,
wobei mit den Bestandteilen des Montagesets ein erfindungsgemässer Verbindungsknoten herstellbar ist.

Das Ziel wird auch erreicht durch eine Verwendung eines erfindungsgemässen Montagesets zur Herstellung eines erfindungsgemässen Verbindungsknotens und/oder eines erfindungsgemässen Tragwerkes.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: die einzelnen Bestandteile eines Verbindungsknotens gemäss einer Ausführungsform der Erfindung,
- Fig. 2: die einzelnen Bestandteile eines Verbindungsknotens in Explosionsansicht,
- Fig. 3: die Verbindung eines Stabes mit einem zentralen Montageelement, im noch nicht zusammengefügten und im zusammengefügten Zustand (Querschnittsdarstellung).
- Fig. 4: einen Ausschnitt eines Tragwerkes mit erfindungsgemässem Verbindungsknoten.

Zu Beginn der Figurenbeschreibung wird ausdrücklich festgehalten, dass es sich hier um eine besonders bevorzugte Ausführungsform der Erfindung handelt, in der mehrere bevorzugte Aspekte gleichzeitig verwirklicht sind.

Dabei stellt das Konzept der Adapterelemente und die formschlüssige Aufnahme den Kern der Erfindung dar, wohingegen die weiteren Aspekte optional sind und - so wie in den Ansprüchen angegeben - zusammen, aber auch getrennt voneinander verwirklicht sein können.

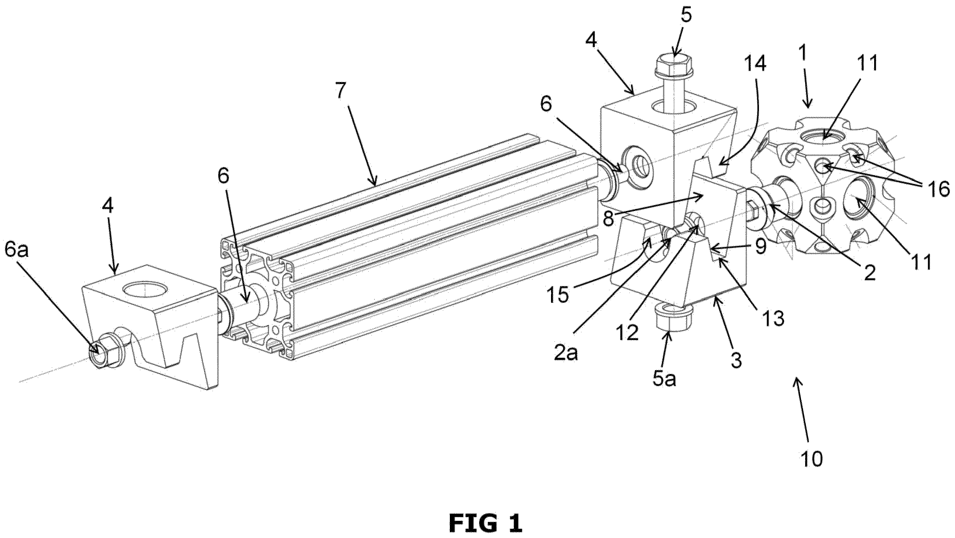

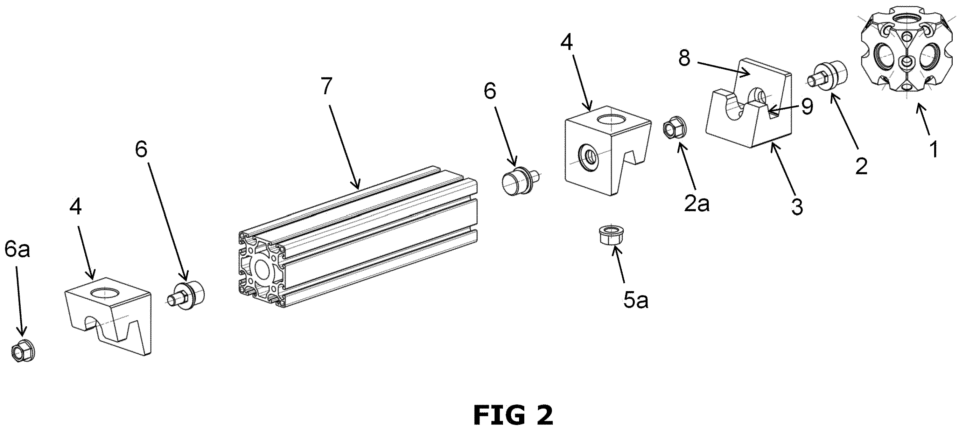

Die Figuren zeigen einen Verbindungsknoten 10 für ein Tragwerk mit einem zentralen Montagekörper 1 zum Verbinden von Stäben 7. An dem Montagekörper 1 sind mehrere, in unterschiedliche Richtungen orientierte Befestigungsstellen 11 bzw. Montageflächen ausgebildet sind. Der Verbindungsknoten 10 umfasst montagekörperseitige Adapterelemente 3, die mittels (hier: bolzenförmiger und Gewinde aufweisender) erster Verbindungselemente 2 an Befestigungsstellen 11 des zentralen Montagekörpers 1 lösbar befestigt sind. Eine kraftschlüssige Befestigung erfolgt hier mittels einer Mutter 2a, welche über das montagekörperferne Ende des Verbindungselementes 2 geschraubt wird (siehe Fig. 1 und 2).

Die montagekörperseitigen Adapterelemente 3 weisen jeweils eine formschlüssige Aufnahme 13 für ein stabseitiges Adapterelement 4 mit einem zur formschlüssigen Aufnahme 13 gegengleichen Abschnitt 14 auf.

Der Montagekörper 1 kann in Form eines Polyeders, insbesondere in Form eines Würfels, oder in Form einer Kugel ausgebildet sein und in seinem Inneren einen Hohlraum ausbilden. In der dargestellten Ausführungsform handelt es sich um einen würfelförmigen Körper mit abgeschnittenen Ecken. Zusätzlich zu den sechs (Haupt-)Befestigungsstellen 11, die jeweils in die Koordinatenrichtungen eines rechtwinkeligen Koordinatensystems weisen, können - wie hier dargestellt auch weitere (Neben-)Befestigungsstellen 16 für diagonal verlaufende und als Streben dienende Stäbe (nicht gezeigt) vorgesehen sein. Diese sind jeweils um 45° zu den (Haupt-)Befestigungsstellen 11 geneigt.

Die ersten Verbindungselemente 2 ragen von dem Montagekörper 1 ab, wobei vorzugsweise die Achse eines ersten Verbindungselementes 2 in einer Symmetrieachse des Montagekörpers 1 liegt und/oder durch den Mittelpunkt des Montagekörpers 1 geht.

Wie aus den Fig. 1 und 2 zu sehen sind die Befestigungsstellen 11 an dem Montagekörper 1 jeweils durch eine Öffnung, vorzugsweise in Form eines Gewindelochs, insbesondere Gewindepassbohrung, zum Aufnehmen, insbesondere Einschrauben, eines ersten Verbindungselementes 2 gebildet.

Die montagekörperseitigen Adapterelemente 3 weisen jeweils ein dem Montagekörper 1 zugewandtes Befestigungsloch 12 für ein erstes Verbindungselement 2 auf. Das Befestigungsloch 12 kann in Form einer Passbohrung zur formschlüssigen Aufnahme des ersten Verbindungselements 2 ausgebildet sein. Fig. 1 und 2 zeigen, dass das Befestigungsloch 12 mit seinem dem Montagekörper 1 abgewandten Ende in die formschlüssige Aufnahme 13 des montagekörperseitigen Adapterelementes 3 mündet.

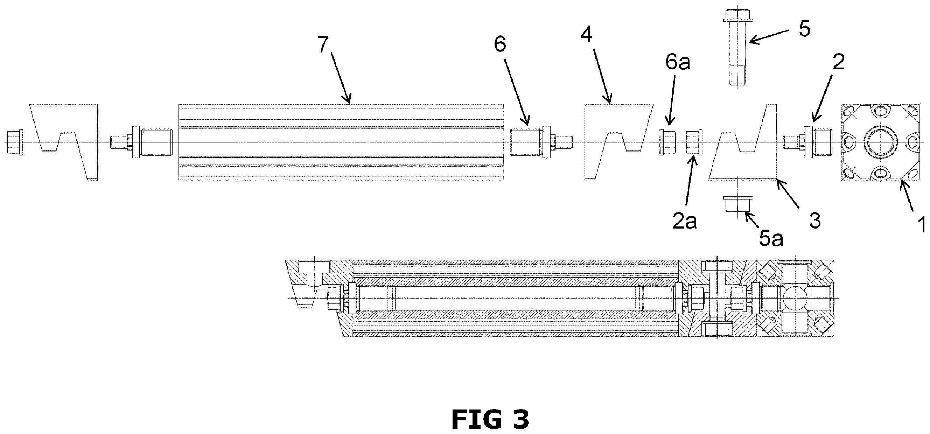

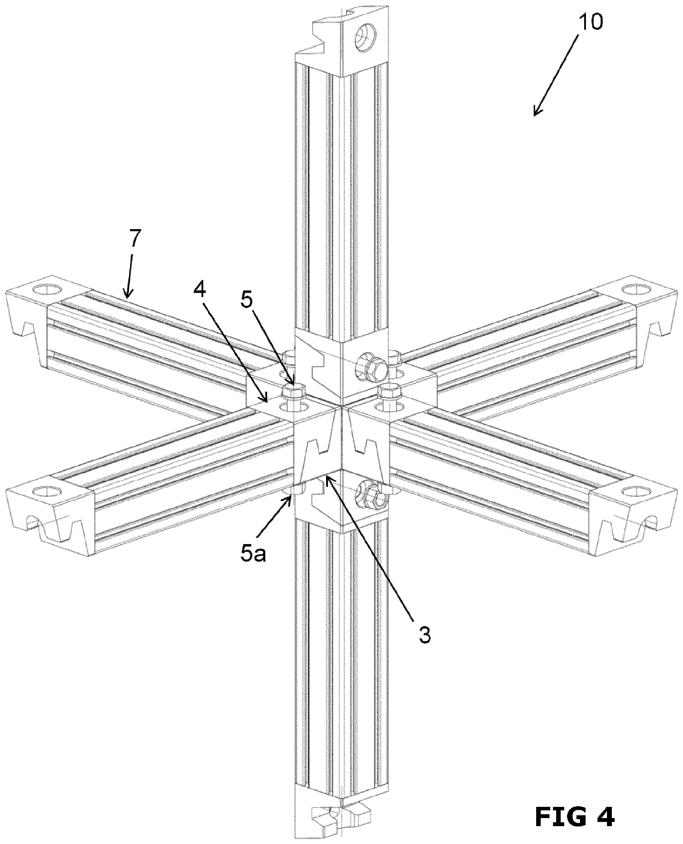

Im zusammengefügten Zustand eines montagekörperseitigen Adapterelementes 3 und eines stabseitigen Adapterelementes 4 ist das dem Montagekörper 1 abgewandte Ende des Befestigungslochs 12 durch das stabseitige Adapterelement 4 - vorzugsweise vollständig - verdeckt ist (siehe Fig. 3 und 4).

Die Aufnahme 13 (für den gegengleichen Abschnitt 14) ist zwischen einer (hier: eine ebene Fläche ausbildenden) ersten Wand 8 und einer - der ersten Wand 8 gegenüberliegenden und vorzugsweise zur ersten Wand 8 geneigten - zweiten Wand 9 des montagekörperseitigen Adapterelementes 3 ausgebildet (siehe insbesondere Fig. 1 und 3). Die erste Wand 8 und die zweite Wand 9 können quer zur Längsachse des von dem montagekörperseitigen Adapterelement 3 getragenen Stabes 7 und/oder zur Längsachse jenes ersten Verbindungselementes 2, mit dem das montagekörperseitige Adapterelement 3 an dem Montagekörper 1 befestigt ist, stehen.

In der ersten Wand 8 ist das dem Montagekörper 1 abgewandte Ende des Befestigungsloches 12 ausgebildet. In der zweiten Wand 9 ist eine mit dem Befestigungsloch 12 fluchtende Ausnehmung 15 zum Einbringen (Einschrauben) eines ersten Verbindungselementes 2 bzw. der dazugehörigen Mutter 2a in das Befestigungsloch 12 ausgebildet.

Die formschlüssige Aufnahme 13 eines montagekörperseitigen Adapterelementes 3 ist asymmetrisch zur Längsachse des von dem montagekörperseitigen Adapterelement 3 getragenen Stabes 7 bzw. asymmetrisch zur Längsachse jenes ersten Verbindungselementes 2, mit dem das montagekörperseitige Adapterelement 3 an dem Montagekörper 1 befestigt ist.

Wie im Ausführungsbeispiel dargestellt öffnet sich die formschlüssige Aufnahme 13 eines montagekörperseitigen Adapterelementes 3 in einer Richtung quer, vorzugsweise senkrecht, zur Längsachse des von dem montagekörperseitigen Adapterelement 3 getragenen Stabes 7 bzw. zur Längsachse jenes ersten Verbindungselementes 2, mit dem das montagekörperseitige Adapterelement 3 an dem Montagekörper 1 befestigt ist. Weiters kann die formschlüssige Aufnahme 13 einen in einer Richtung quer, vorzugsweise senkrecht, zur Längsachse des von dem montagekörperseitigen Adapterelement 3 getragenen Stabes 7 und/oder zur Längsachse jenes ersten Verbindungselementes 2, mit dem das montagekörperseitige Adapterelement 3 an dem Montagekörper 1 befestigt ist, zulaufenden - vorzugsweise konusförmig und/oder wannenförmig und/oder V-förmig zulaufenden - Abschnitt aufweisen.

Aus den Figuren ist ersichtlich, dass die bevorzugte dargestellte Ausführungsform eine hakenförmige Aufnahme 13 aufweist.

Der zur formschlüssigen Aufnahme 13 gegengleiche Abschnitt 14 eines stabseitigen Adapterelements 4 ist in einer Richtung quer, vorzugsweise senkrecht, zur Längsachse des das stabseitige Adapterelement 4 tragenden Stabes 7 bzw. zur Längsachse jenes ersten Verbindungselementes 2, mit dem das montagekörperseitige Adapterelement 3 an dem Montagekörper 1 befestigt ist, in die formschlüssige Aufnahme 13 des montagekörperseitigen Adapterelements 3 einfügbar (siehe Fig. 1).

Ein montagekörperseitiges Adapterelement 3 und ein stabseitiges Adapterelement 4 sind im zusammengefügten Zustand durch ein (hier: bolzenförmiges) zweites Verbindungselement 5 miteinander verbunden. Das zweite Verbindungselement 5 dabei durch den Bereich der formschlüssigen Aufnahme 13 hindurchtreten (siehe Fig. 3). Die (Längs-)Achse des bolzenförmigen zweiten Verbindungselementes 5 verläuft in der dargestellten Ausführungsform quer bzw. senkrecht zur Längsachse des das stabseitige Adapterelement 4 tragenden Stabes 7 bzw. zur (Längs-)achse jenes ersten Verbindungselementes 2, mit dem das montagekörperseitige Adapterelement 3 an dem Montagekörper 1 befestigt ist, verläuft. Eine kraftschlüssige Befestigung erfolgt hier mittels einer Mutter 5a, welche über ein Ende des Verbindungselementes 5 geschraubt wird (siehe Fig. 1, 3 und 5).

Die stabseitigen Adapterelemente 4 haben im Wesentlichen dieselbe, hier sogar eine identische, Geometrie wie die montagekörperseitigen

Adapterelemente 3. Ein montagekörperseitiges Adapterelement 3 und ein stabseitiges Adapterelement 4 können im zusammengefügten Zustand zusammen eine Quaderform, vorzugsweise Würfelform, bilden.

In einer besonderen Ausführungsform können montagekörperseitige Adapterelemente 3 und/oder stabseitige Adapterelemente 4 zumindest teilweise - vorzugsweise vollständig - aus einem verformbaren, insbesondere elastisch verformbaren, und/oder schwingungsdämpfenden Material, vorzugsweise einem Gummi, einem Elastomer, einem Schaumstoff und/oder einem Kautschuk, gebildet sein. Dadurch erhalten sie eine zusätzliche Funktionalität (Toleranzausgleich, dämpfende Wirkung)

Die stabseitigen Adapterelemente 4 können ebenfalls mittels - vorzugsweise bolzenförmiger und/oder zumindest ein Gewinde aufweisender - dritter Verbindungselemente 6 mit den Stäben 7 verbunden sein. Die Längsachse eines dritten Verbindungselementes 6 ist vorzugsweise im Wesentlichen parallel zur Längsachse des jeweiligen Stabes 7.

Fig. 4 zeigt einen Ausschnitt aus einem Tragwerk, welches z.B. ein Gerüst, ein Gestell oder Bauwerk sein kann, mit einer Vielzahl von Stäben 7, die durch einen Verbindungsknoten 10 miteinander verbunden sind.

Wie bereits erwähnt bezieht sich die Erfindung auch auf ein die einzelnen Bestandteile umfassendes Montageset zur Herstellung eines Verbindungsknotens 10 für ein Tragwerk.

Die Erfindung ist nicht auf die beschriebenen Ausführungsformen und die darin hervorgehobenen Aspekte beschränkt. Vielmehr ist innerhalb des Erfindungsgedankens eine Vielzahl von Abwandlungen möglich, die im Rahmen fachmännischen Handelns liegen. Ebenso ist es möglich, durch Kombination der genannten Mittel und Merkmale weitere Ausführungsvarianten zu realisieren, ohne den Rahmen der Erfindung zu verlassen.

### Bezugszeichenliste

- 1: zentraler Montagekörper
- 2: erstes Verbindungselement
- 2a: Mutter
- 3: montagekörperseitiges Adapterelement
- 4: stabseitiges Adapterelement
- 5: zweites Verbindungselement
- 5a: Mutter
- 6: drittes Verbindungselement
- 6a: Mutter
- 7: Stab
- 8: erste Wand
- 9: zweite Wand
- 10: Verbindungsknoten
- 11: Befestigungsstelle
- 12: Befestigungsloch
- 13: formschlüssige Aufnahme
- 14: gegengleicher Abschnitt
- 15: fluchtende Ausnehmung
- 16: (Neben-)Befestigungsstellen

## Patentansprüche

1. Verbindungsknoten (10) für ein Tragwerk umfassend einen zentralen Montagekörper (1) zum Verbinden von Stäben (7) des Tragwerkes, wobei an dem Montagekörper (1) zumindest zwei, vorzugsweise zumindest sechs, in unterschiedliche Richtungen orientierte Befestigungsstellen (11) ausgebildet sind,
**dadurch gekennzeichnet, dass** der Verbindungsknoten (10) montagekörperseitige Adapterelemente (3), die mittels - vorzugsweise bolzenförmiger und/oder zumindest ein Gewinde aufweisender - erster Verbindungselemente (2) an Befestigungsstellen (11) des zentralen Montagekörpers (1) - vorzugsweise lösbar - befestigt sind, umfasst, wobei die montagekörperseitigen Adapterelemente (3) jeweils eine formschlüssige Aufnahme (13) für ein stabseitiges Adapterelement (4) mit einem zur formschlüssigen Aufnahme (13) gegengleichen Abschnitt (14) aufweisen.

2. Verbindungsknoten nach Anspruch 1, **dadurch gekennzeichnet, dass** der Montagekörper (1) in Form eines Polyeders, insbesondere in Form eines Würfels, oder in Form einer Kugel ausgebildet ist und/oder dass die Befestigungsstellen (11) an dem Montagekörper (1) jeweils durch eine Öffnung, vorzugsweise in Form eines Gewindelochs, insbesondere Gewindepassbohrung, zum Aufnehmen, insbesondere Einschrauben, eines ersten Verbindungselementes (2) gebildet sind.

3. Verbindungsknoten nach Anspruch 1 oder 2, **dadurch gekennzeichnet, dass** die ersten Verbindungselemente (2) von dem Montagekörper (1) abragen, wobei vorzugsweise die Achse eines ersten Verbindungselementes (2) in einer Symmetrieachse des Montagekörpers (1) liegt und/oder durch den Mittelpunkt des Montagekörpers (1) geht.

4. Verbindungsknoten nach einem der vorhergehenden Ansprüche, **dadurch gekennzeichnet, dass** montagekörperseitige Adapterelemente (3) jeweils ein dem Montagekörper (1) zugewandtes Befestigungsloch (12) für ein erstes Verbindungselement (2) aufweisen, wobei vorzugsweise das Befestigungsloch (12) in Form einer Passbohrung zur formschlüssigen Aufnahme des ersten Verbindungselements (2) ausgebildet ist und/oder wobei vorzugsweise das Befestigungsloch (12) mit seinem dem Montagekörper (1) abgewandten Ende in die formschlüssige Aufnahme (13) des montagekörperseitigen Adapterelementes (3) mündet.

5. Verbindungsknoten nach einem der vorhergehenden Ansprüche, **dadurch gekennzeichnet, dass** die Aufnahme (13) zwischen einer - vorzugsweise eine ebene Fläche ausbildenden - ersten Wand (8) und einer - der ersten Wand (8) gegenüberliegenden und vorzugsweise zur ersten Wand (8) geneigten - zweiten Wand (9) des montagekörperseitigen Adapterelementes (3) ausgebildet ist, wobei die erste Wand (8) und die zweite Wand (9) quer zur Längsachse des von dem montagekörperseitigen Adapterelement (3) getragenen Stabes (7) und/oder zur Längsachse jenes ersten Verbindungselementes (2), mit dem das montagekörperseitige Adapterelement (3) an dem Montagekörper (1) befestigt ist, stehen, wobei vorzugsweise in der ersten Wand (8) das dem Montagekörper (1) abgewandte Ende des Befestigungsloches (12) ausgebildet ist und/oder wobei vorzugsweise in der zweiten Wand (9) eine mit dem Befestigungsloch (12) fluchtende Ausnehmung (15), insbesondere zum Einbringen eines ersten Verbindungselementes (2) in das Befestigungsloch (12) und/oder zum Verschrauben einer Mutter (2a) auf dem ersten Verbindungselement (2), ausgebildet ist.

6. Verbindungsknoten nach einem der vorhergehenden Ansprüche, **dadurch gekennzeichnet, dass** die formschlüssige Aufnahme (13) eines montagekörperseitigen Adapterelementes (3) asymmetrisch zur Längsachse des von dem montagekörperseitigen Adapterelement (3) getragenen Stabes (7) und/oder asymmetrisch zur Längsachse jenes ersten Verbindungselementes (2), mit dem das montagekörperseitige Adapterelement (3) an dem Montagekörper (1) befestigt ist, ist **und/oder dass** die formschlüssige Aufnahme (13) durch eine hakenförmige Struktur gebildet ist.

7. Verbindungsknoten nach einem der vorhergehenden Ansprüche, **dadurch gekennzeichnet, dass** sich die formschlüssige Aufnahme (13) eines montagekörperseitigen Adapterelementes (3) in einer Richtung quer, vorzugsweise senkrecht, zur Längsachse des von dem montagekörperseitigen Adapterelement (3) getragenen Stabes (7) und/oder zur Längsachse jenes ersten Verbindungselementes (2), mit dem das montagekörperseitige Adapterelement (3) an dem Montagekörper (1) befestigt ist, öffnet **und/oder dass** die formschlüssige Aufnahme (13) einen in einer Richtung quer, vorzugsweise senkrecht, zur Längsachse des von dem montagekörperseitigen Adapterelement (3) getragenen Stabes (7) und/oder zur Längsachse jenes ersten Verbindungselementes (2), mit dem das montagekörperseitige Adapterelement (3) an dem Montagekörper (1) befestigt ist, zulaufenden - vorzugsweise konusförmig und/oder wannenförmig und/oder V-förmig zulaufenden - Abschnitt aufweist.

8. Verbindungsknoten nach einem der vorhergehenden Ansprüche, **dadurch gekennzeichnet, dass** der zur formschlüssigen Aufnahme (13) gegengleiche Abschnitt (14) eines stabseitigen Adapterelements (4) - vorzugsweise ausschliesslich - in einer Richtung quer, vorzugsweise senkrecht, zur Längsachse des das stabseitige Adapterelement (4) tragenden Stabes (7) und/oder zur Längsachse jenes ersten Verbindungselementes (2), mit dem das montagekörperseitige Adapterelement (3) an dem Montagekörper (1) befestigt ist, in die formschlüssige Aufnahme (13) des montagekörperseitigen Adapterelement (3) einfügbar ist.

9. Verbindungsknoten nach einem der vorhergehenden Ansprüche, **dadurch gekennzeichnet, dass** ein montagekörperseitiges Adapterelement (3) und ein stabseitiges Adapterelement (4) im zusammengefügten Zustand durch ein - vorzugsweise bolzenförmiges - zweites Verbindungselement (5) miteinander verbunden sind, wobei vorzugsweise das zweite Verbindungselement (5) durch den Bereich der formschlüssigen Aufnahme (13) hindurchtritt und/oder wobei vorzugsweise die Achse des bolzenförmigen zweiten Verbindungselementes (5) quer, vorzugsweise senkrecht, zur Längsachse des das stabseitige Adapterelement (4) tragenden Stabes (7) und/oder zur Längsachse jenes ersten Verbindungselementes (2), mit dem das montagekörperseitige Adapterelement (3) an dem Montagekörper (1) befestigt ist, verläuft.

10. Verbindungsknoten nach einem der vorhergehenden Ansprüche, **dadurch gekennzeichnet, dass** die stabseitigen Adapterelemente (4) im Wesentlichen dieselbe, vorzugsweise eine identische, Geometrie aufweisen wie die montagekörperseitigen Adapterelemente (3).

11. Verbindungsknoten nach einem der vorhergehenden Ansprüche, **dadurch gekennzeichnet, dass** die montagekörperseitigen Adapterelemente (3) und/oder die stabseitigen Adapterelemente (4) zumindest teilweise - vorzugsweise vollständig - aus einem verformbaren, insbesondere elastisch verformbaren, und/oder schwingungsdämpfenden Material, vorzugsweise einem Gummi, einem Elastomer, einem Schaumstoff und/oder einem Kautschuk, gebildet sind.

12. Verbindungsknoten nach einem der vorhergehenden Ansprüche, **dadurch gekennzeichnet, dass** die stabseitigen Adapterelemente (4) mittels - vorzugsweise bolzenförmiger und/oder zumindest ein Gewinde aufweisender - dritter Verbindungselemente (6) mit den Stäben (7) verbunden sind, wobei vorzugsweise die Längsachse eines dritten Verbindungselementes (6) im Wesentlichen parallel zur Längsachse des jeweiligen Stabes (7) ist.

13. Tragwerk, insbesondere ein Gerüst, ein Gestell oder Bauwerk, mit einer Vielzahl von Stäben (7), vorzugsweise in Form von Profilen, insbesondere Hohlprofilen, die durch mehrere Verbindungsknoten (10) nach einem der vorhergehenden Ansprüche miteinander verbunden sind.

14. Montageset zur Herstellung eines Verbindungsknotens (10) für ein Tragwerk, umfassend:
- einen zentralen Montagekörper (1) zum Verbinden von Stäben (7) des Tragwerkes, wobei an dem Montagekörper (1) zumindest zwei, vorzugsweise zumindest sechs, in unterschiedliche Richtungen orientierte Befestigungsstellen (11) ausgebildet sind,
- montagekörperseitige Adapterelemente (3) mit jeweils einer formschlüssigen Aufnahme (13) für ein stabseitiges Adapterelement (4),
- erste Verbindungselemente (2) zum Befestigen der montagekörperseitigen Adapterelemente (3) an einer Befestigungsstelle (11) des zentralen Montagekörpers (1), wobei vorzugsweise die ersten Verbindungselemente (2) bolzenförmig sind und/oder zumindest ein Gewinde aufweisen,
- stabseitige Adapterelemente (4) mit jeweils einem zur formschlüssigen Aufnahme (13) eines montagekörperseitigen Adapterelementes (14) gegengleichen Abschnitt,
- und gegebenenfalls Stäben (7), vorzugsweise in Form von Profilen, insbesondere Hohlprofilen, mit denen die stabseitigen Adapterelemente (4) verbindbar sind,
wobei mit den Bestandteilen des Montagesets ein Verbindungsknoten (10) nach einem der Ansprüche 1 bis 12 herstellbar ist.

15. Verwendung eines Montagesets nach Anspruch 14 zur Herstellung eines Verbindungsknotens (10) nach einem der Ansprüche 1 bis 12 und/oder eines Tragwerkes nach Anspruch 13.
